# EUROPEAN PATENT APPLICATION

(11) **EP 1 544 461 A1**
(43) Date of publication of application: **22.06.2005**
(21) Application number: 03258051.6
(22) Date of filing: 19.12.2003
(51) Int. Cl.: F03D 11/04, F03D 1/04, F03D 7/02

(54) **Apparatus for generating electric power using wind energy**

(71) Applicant: Chih-Fong Chen, Ling-Ya Dist, Kaohsiung City (TW)
(72) Inventor: Chih-Fong Chen, Ling-Ya Dist, Kaohsiung City (TW)
(74) Representative: Nicholls, Michael John

(57) **Abstract**

An apparatus (2) for generating electric power from wind energy includes a structural frame (22) configured with a vertical array of accommodating spaces (23) and having opposite inlet and outlet sides (232, 233), and a plurality of electric generating units (20), each of which includes a windmill (24) mounted in a respective accommodating space (23) to convert energy of wind blowing from the inlet side (232) to the outlet side (233) into a mechanical rotary power output, and a generator (25) coupled to the windmill (24) to convert the mechanical rotary power output into electric power.

## Description

The invention relates to an apparatus for generating electric power using wind energy.

Since wind energy is widely available, inexhaustible, clean, and an inexpensive energy source as compared to water energy, thermal energy generated by fossil fuel, and nuclear energy, electric power generation using wind energy is very popular.

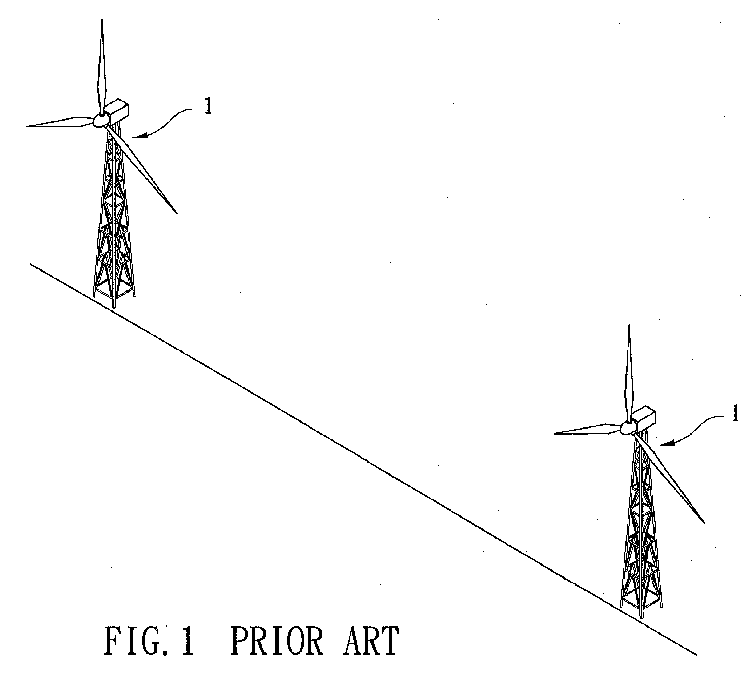

Referring to Figure 1, a conventional power generating station is shown to include a plurality of wind power generators 1 disposed spacedly apart from each other.

The following are some of the drawbacks of the known power generating station:
1. The arrangement of the wind power generators 1 cannot ensure stable electric generation for an area having an unstable amount of wind.
2. In order to minimize interference between adjacent ones of the wind power generators 1, a distance between adjacent wind power generators 1 should be about 3~6 times of the diameter of a wind impeller of the wind power generator 1, thereby resulting in a relatively large space requirement.
3. Since the wind power generators 1 generate noise during activation, the power generating station has to be located at a remote place far from a densely populated area, thereby resulting in inconvenience during implementation.

Therefore, the object of the present invention is to provide an apparatus for generating electric power from wind energy that can overcome the aforesaid drawbacks of the prior art.

According to the present invention, there is provided an apparatus for generating electric power from wind energy. The apparatus includes:
a structural frame configured with a vertical array of accommodating spaces and having opposite inlet and outlet sides; and
a plurality of electric generating units, each of which includes
   a windmill mounted in a respective one of the accommodating spaces to convert energy of wind blowing from the inlet side to the outlet side into a mechanical rotary power output, and
   a generator coupled to the windmill to convert the mechanical rotary power output into electric power.

Other features and advantages of the present invention will become apparent in the following detailed description of the preferred embodiments with reference to the accompanying drawings, of which:
Figure 1 is a perspective view showing a conventional power generating station for generating electric power from wind energy;
Figure 2 is a schematic front view showing the first preferred embodiment of an apparatus for generating electric power from wind energy according to this invention;
Figure 3 is aperspective, partlycutawayviewshowing the first preferred embodiment;
Figure 4 is a fragmentary partly cutaway schematic view showing an electric generating unit of the first preferred embodiment;
Figure 5 is a perspective view showing the second preferred embodiment of an apparatus for generating electric power form wind energy according to this invention;
Figure 6 is a schematic sectional view showing the second preferred embodiment;
Figure 7 is a perspective view showing the third preferred embodiment of an apparatus for generating electric power form wind energy according to this invention;
Figure 8 is a schematic partly sectional view showing the third preferred embodiment;
Figure 9 is a schematic circuit block diagram illustrating an orientation control unit of the third preferred embodiment;
Figure 10 is a schematic top view illustrating a structural frame of the third preferred embodiment in a state of use;
Figure 11 is a perspective view showing the fourth preferred embodiment of an apparatus for generating electric power form wind energy according to this invention;
Figure 12 is a fragmentary partly cutaway schematic view showing an electric generating unit of the fourth preferred embodiment; and
Figure 13 is a perspective view showing the fourth preferred embodiment in a state of use.

Before the present invention is described in greater detail, it should be noted that like elements are denoted by the same reference numerals throughout the disclosure.

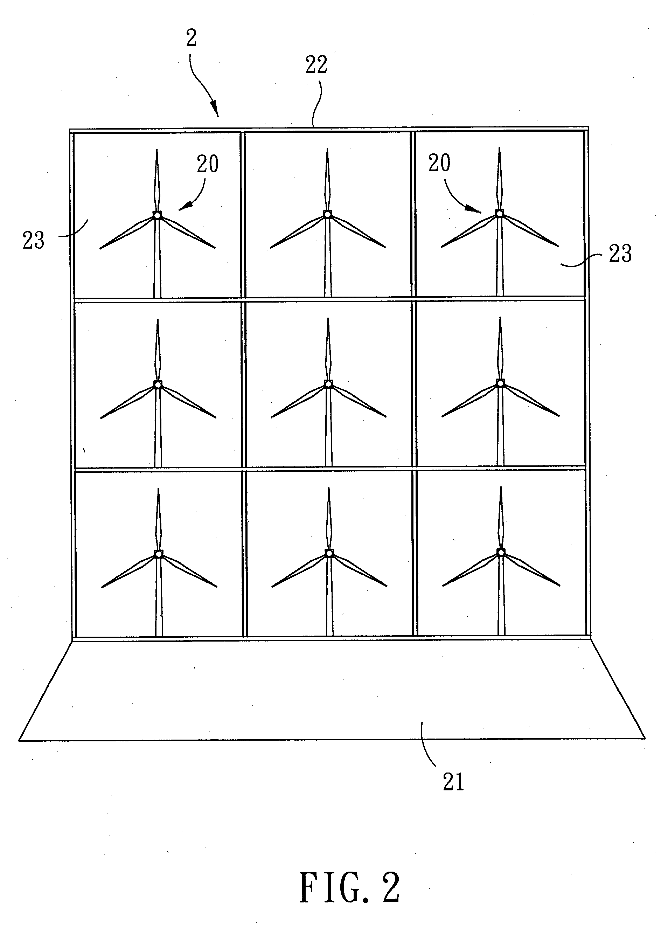

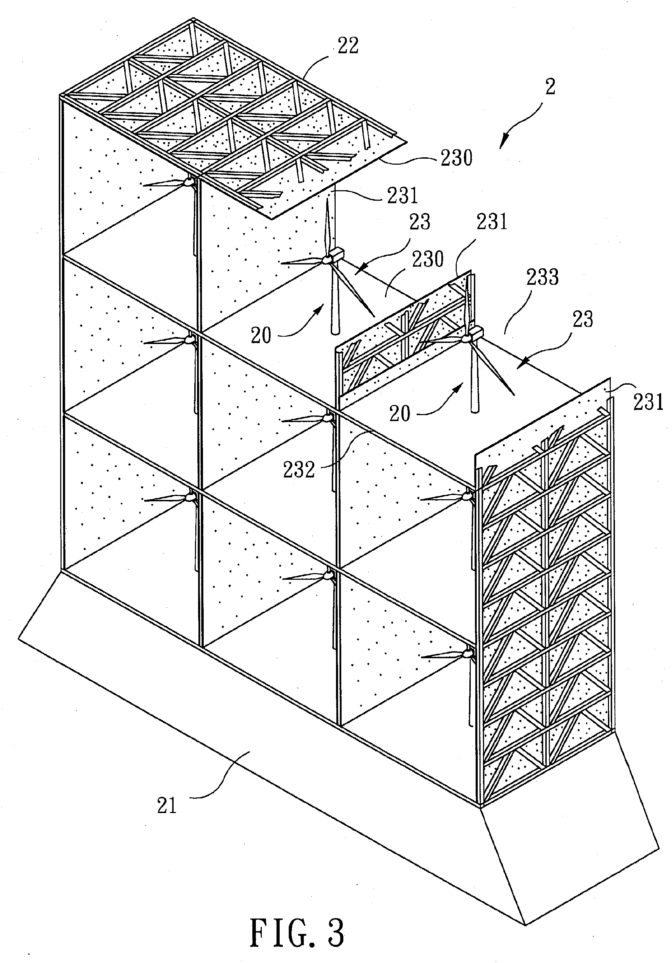

Referring to Figures 2 and 3, the first preferred embodiment of an apparatus 2 for generating electric power fromwind energy according to the present invention is shown to include a structural frame 22 and a plurality of electric generating units 20.

The structural frame 22, which is mounted on a base 21, is configured with a vertical array, such as a 3×3 array, of accommodating spaces 23, andhas opposite inlet and outlet sides 232, 233. In this embodiment, each of the accommodating spaces 23 is rectangular. The structural frame 22 is provided with a plurality of partition walls 231, which serve as lateral right and left walls confining the accommodating spaces 23, to isolate horizontally adjacent ones of the accommodating spaces 23 from each other, as shown in Figure 3. Each of the partition walls 231 is made of a material capable of damping sound. Each of the accommodating spaces 23 is further provided with top and bottom linings 230 made of a material capable of damping sound, as shown in Figure 3.

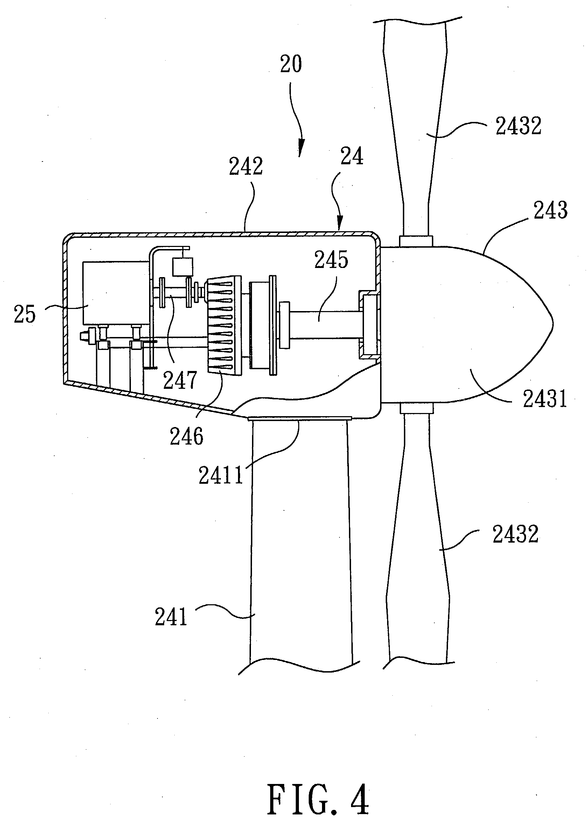

With further reference to Figure 4, each of the electric generating units 20 includes a windmill 24 and a generator 25. The windmill 24 is mounted in a respective one of the accommodating spaces 23 to convert energy of wind blowing from the inlet side 232 to the outlet side 233 into a mechanical rotary power output. The generator 25 is coupled to the windmill 24 to convert the mechanical rotary power into electric power. In this embodiment, the windmill 24 includes a wind impeller 243 having a hub 2431, and a plurality of blades 2432 that extend from the hub 2431, an impeller shaft 245 coupled to the hub 2431, a speed increasing unit 246 connected to the impeller shaft 245 for generating a rotary output with a speed faster than that of the impeller shaft 245 in a known manner, and a coupling shaft 247 for coupling the speed increasing unit 246 to the generator 25. The windmill 24 further includes an upright prop 241 mounted on the structural frame 22, and a casing 242 mounted on a top end 2411 of the upright prop 241 and having the wind impeller 243 mounted rotatably thereon. In this embodiment, the speed increasing unit 246, the coupling shaft 247 and the generator 25 are disposed in the casing 242.

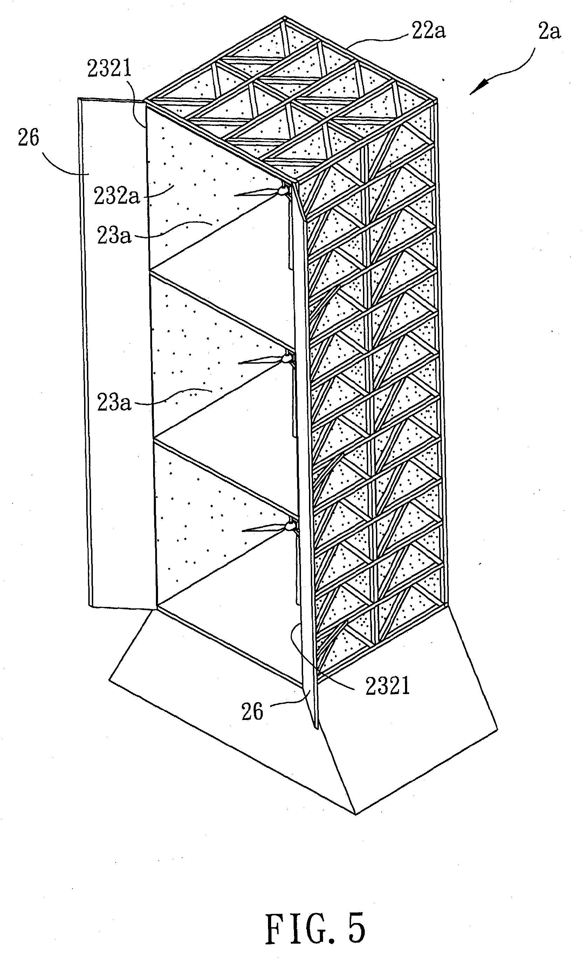

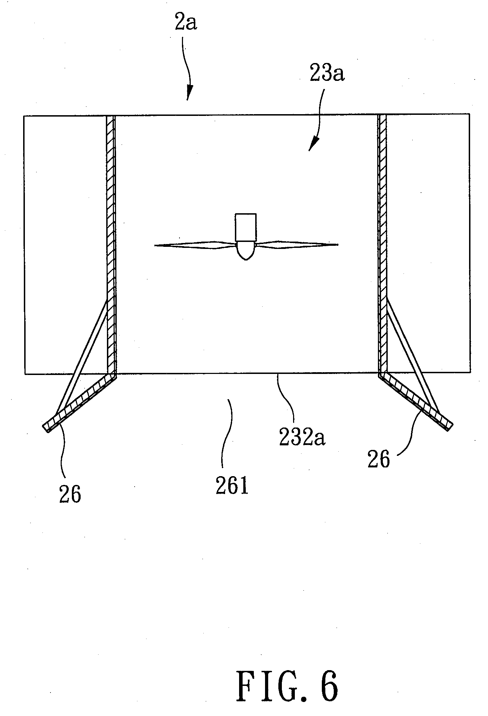

Figures 5 and 6 illustrate the second preferred embodiment of an apparatus (2a) for generating electric power from wind energy according to this invention, which is a modification of the first preferred embodiment. In this embodiment, the structural frame (22a) is configured with a single vertical column, i.e., a 3×1 array, of accommodating spaces (23a). The inlet side (232a) of the structural frame (22a) has opposite vertical edges 2321 formed respectively with a pair of wind guiding pieces 26 that define a wind channel 261 converging toward the inlet side (232a), as best shown in Figure 6. As a result of the wind guiding pieces 26, the speed and amount of wind flowing through the wind channel 261 are increased accordingly. The apparatus (2a) of the second preferred embodiment is thus suitable for areas that experience low speed wind.

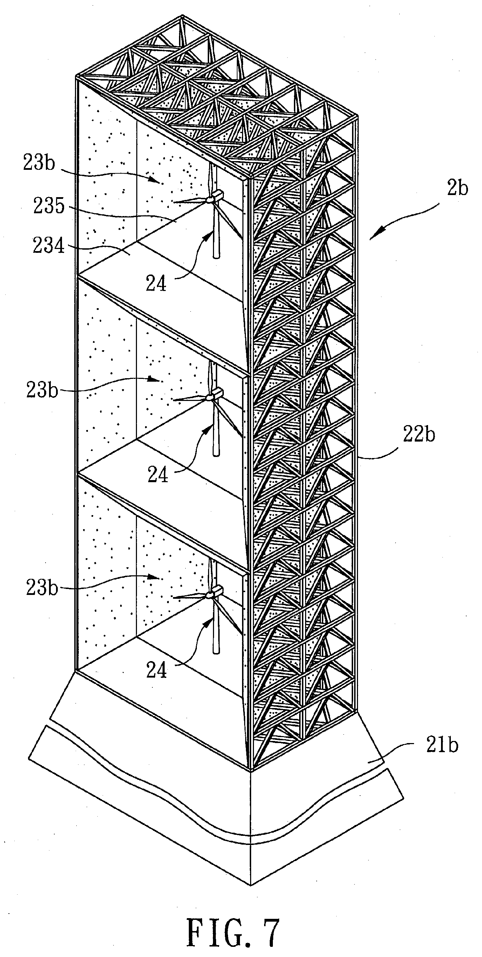

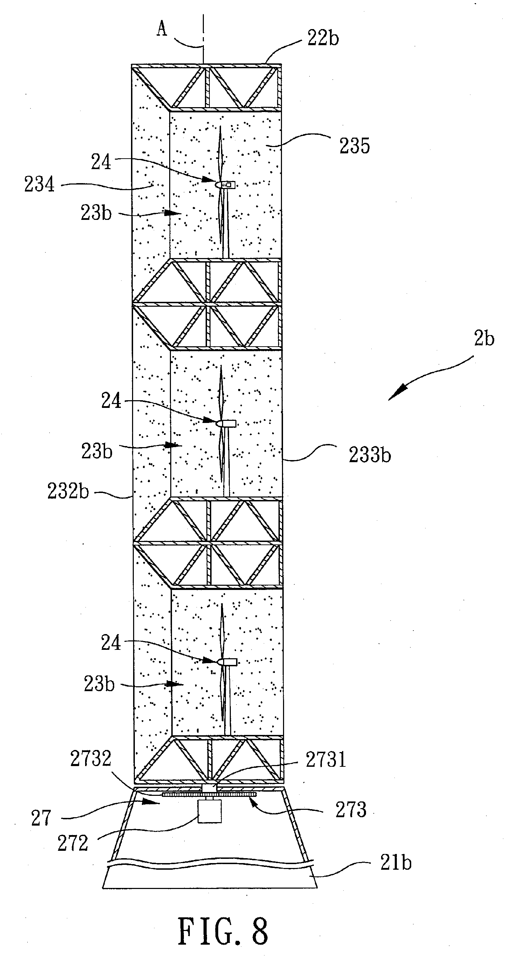

Figures 7 and 8 illustrate the third preferred embodiment of an apparatus (2b) for generating electric power fromwind energy according to this invention, which is a modification of the first preferred embodiment. In this embodiment, the structural frame (22b) is configured with a single vertical column, i.e., a 3×1 array, of accommodating spaces (23b), each of which includes a windmill mounting portion 235 having the windmill 24 of the respective one of the electric generating units mounted therein, and a wind guiding portion 234 between the inlet side (232b) of the structural frame (22b) and the windmill mounting portion 235 . The wind guiding portion 234 defines a wind channel that converges toward the windmill mounting portion 235.

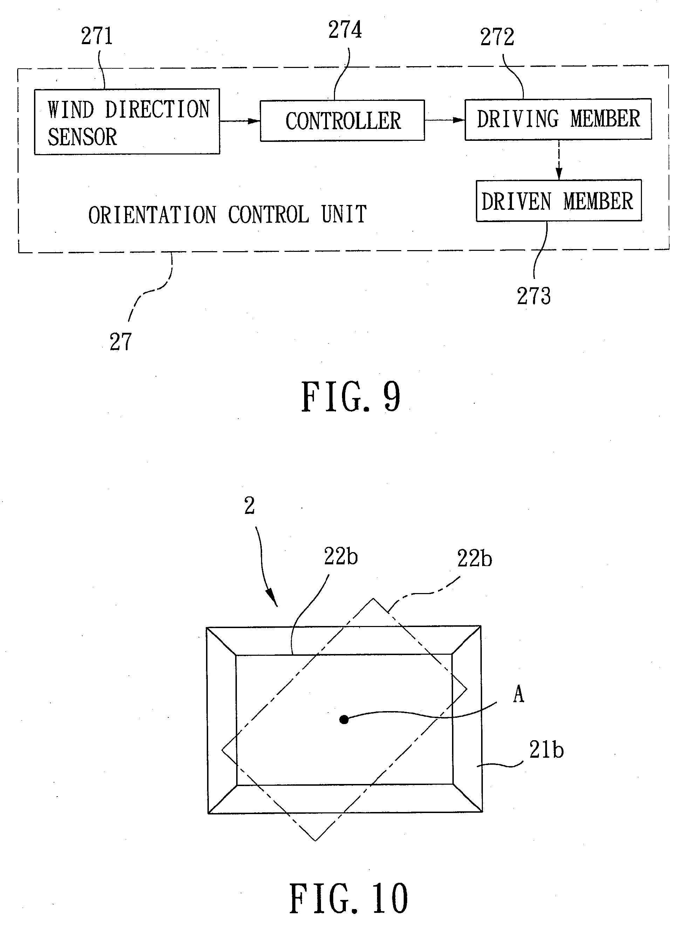

Referring further to Figures 8 to 10, the structural frame (22b) is mounted rotatably on the base (21b). An orientation control unit 27 is coupled to the base (21b) and the structural frame (22b) for varying orientation of the structural frame (22b) relative to the base (21b) in accordance with wind direction. As shown in Figure 9, the orientation control unit 27 includes a driving member 272, a driven member 273, a wind direction sensor 271, and a controller 274. The driving member 272, such as a driving motor, is mounted in the base (22b) . The driven member 273 is mounted on the structural frame (22b), and is driven rotatably by the driving member 2 72. In this embodiment, the driven member 273 includes a mounting portion 2731 mounted on a bottom surface of the structural frame (22b) and extending downwardly from the bottom surface of the structural frame (22b) into the base (21b) , and a driven plate 2732 disposed in the base (21b) , connected to the mounting portion 2731 and meshing with the driving member 272 (see Figure 8) . The wind direction sensor 271 generates a wind direction signal in accordance with the wind direction. The controller 274 is coupled electrically to the driving member 272 and the wind direction sensor 271, and controls the driving member 272 according to the wind direction signal received from the wind direction sensor 271 so as to drive the driven member 273 to rotate the structural frame (22b) about avertical axis (A) relative to the base (21b) , as shown in Figure 10. As such, the windmill 24 of each electric generating unit can be oriented to face the wind constantly.

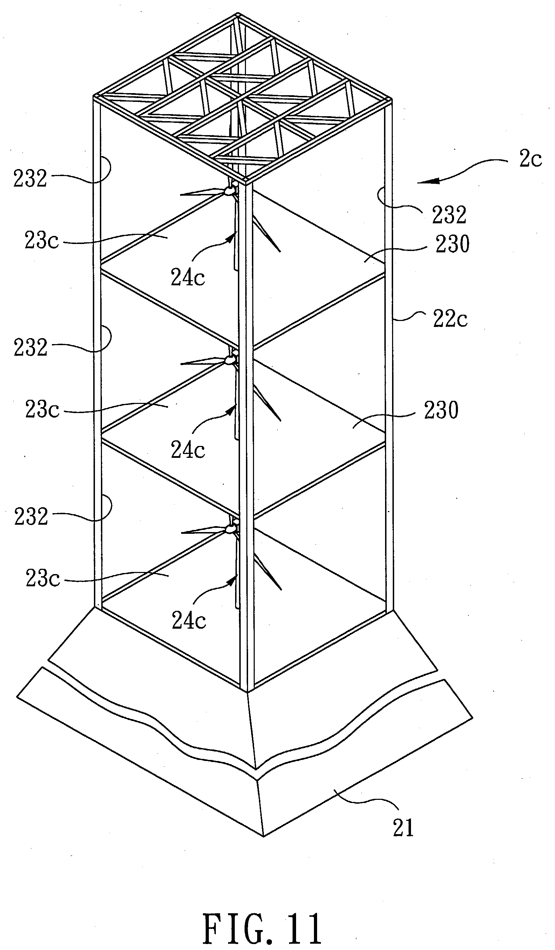

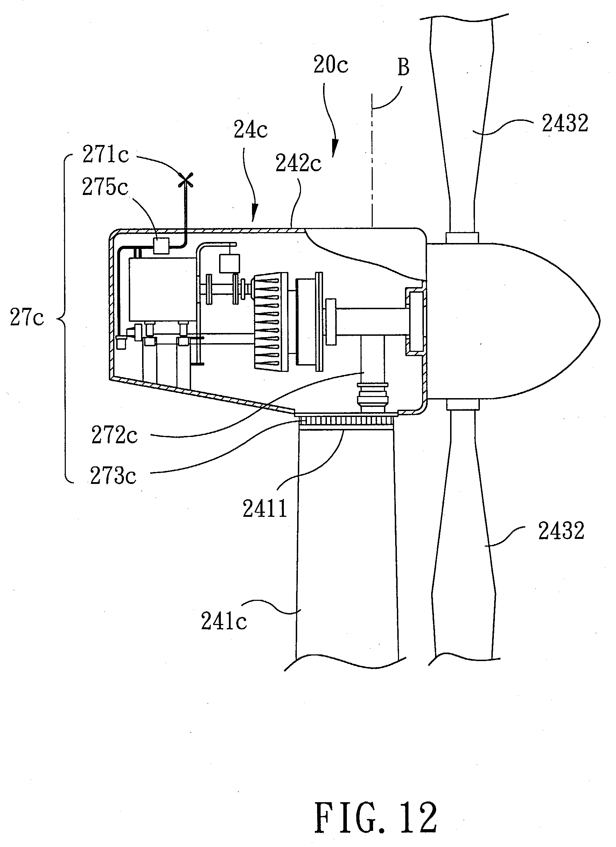

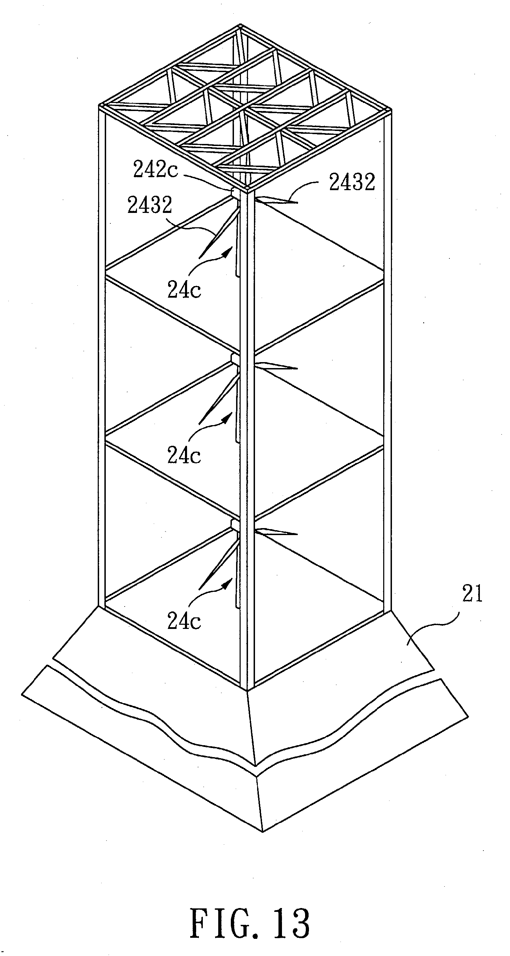

Figures 11 to 13 illustrate the fourth preferred embodiment of an apparatus (2c) for generating electric power fromwind energy according to this invention, which is a modification of the first preferred embodiment. Unlike the previous embodiments, the structural frame (22c) is configured with a 3×1 array of accommodating spaces (23c) , each of which is merely provided with the top and bottom linings 230 made of a material capable of damping sound and does not have the partition walls, as shown in Figure 11. In this embodiment, the casing (242c) of the windmill (24c) of each of the electric generating units (20c) is mounted rotatably on the upright prop 241. Each of the electric generating units (20c) further includes an orientation control unit (27c) coupled to the upright prop (241c) and the casing (242c) for varying orientation of the casing (242c) relative to the upright prop (241c) in accordance with wind direction. As shown in Figure 12, the orientation control unit (27c) includes a driving member (272c), a driven member (273c) , a wind direction sensor (271c) , and a controller (275c). The driving member (272c), such as a driving motor, is mounted on the top end 2411 of the upright prop (241c) and extends into the casing (242c). The driven member (273c) , such as a driven plate, is mounted on the casing (242c) and is driven rotatably by the driving member (272c) . The wind direction sensor (271c) is disposed on the casing (242c) and generates a wind direction signal in accordance with the wind direction. The controller (275c) is coupled electrically to the driving member (272c) and the wind direction sensor (271c). The controller (275c) controls the driving member (272c) according to the wind direction signal received from the wind direction sensor (271c) to rotate the casing (242c) about a vertical axis (B) relative to the upright prop (241c) . As such, the wind impeller 2432 of the windmill (24c) of each electric generating unit (20c) can be oriented to face the wind constantly, as shown in Figure 13.

The following are some of the advantages attributed to the apparatus of the present invention:
1. Due to the presence of the structural frame configured with the accommodating spaces, interface between adjacent ones of the windmills can be minimized such that conversion efficiency of the apparatus is increased accordingly.
2 . Due to the presence of the wind channels, the speed and amount of wind blowing from the inlet side to the outlet side of the structural frame can be increased, thereby resulting in a corresponding increase in the generated amount of electric power.
3. Since the structural frame is configured with the vertical array of the accommodating spaces, high altitude wind energy can be effectively utilized, and space requirement for the apparatus can be reduced to a minimum.
4. Due to the presence of the partition walls and the linings capable of damping sound, noise generated as a result of operation of the windmills can be reduced.
5. Due to the presence of the orientation control units, the apparatus of this invention can use wind energy from various directions so as to enable the electric generating units to generate electric power stably.

## Claims

1. An apparatus (2, 2a, 2b, 2c) for generating electric power from wind energy, **characterized by**:
a structural frame (22, 22a, 22b, 22c) configured with a vertical array of accommodating spaces (23, 23a, 23b, 23c) and having opposite inlet andoutlet sides (232, 233; 232a, 233a; 232b, 233b); and
a plurality of electric generating units (20, 20a, 20b, 20c), each of which includes
a windmill (24, 24c) mounted in a respective one of said accommodating spaces (23, 23a, 23b, 23c) to convert energy of wind blowing from said inlet side (232, 232a, 232b, 232c) to said outlet side (233, 233a, 233b, 233c) into a mechanical rotary power output, and
a generator (25) coupled to said windmill (24, 24c) to convert the mechanical rotary power output into electric power.

2. The apparatus as claimed in Claim 1, **characterized in that** each of said accommodating spaces (23, 23a, 23b, 23c) is rectangular.

3. The apparatus as claimed in Claim 1 or 2, **characterized**
**in that** said windmill (24, 24c) includes:
a wind impeller (243) having a hub (2431), and a plurality of blades (2432) that extend from said hub (2431);
an impeller shaft (245) coupled to said hub (2431) ;
a speed increasing unit (246) connected to said impeller shaft (245) for generating a rotary output with a speed faster than that of said impeller shaft (245) ; and
a coupling shaft (247) for coupling said speed increasing unit (246) to said generator (25).

4. The apparatus as claimed in Claim 3, **characterized in that** said windmill (24, 24c) further includes:
an upright prop (241, 241c) mounted on said structural frame (22, 22a, 22b, 22c); and
a casing (242, 242c) mounted on a top end (2411) of said upright prop (241, 241c) and having said wind impeller (243) mounted rotatably thereon.

5. The apparatus as claimed in Claim 1, 2, 3 or 4 **characterized**
**in that** said structural frame (22, 22a, 22b) is provided with a plurality of partition walls (231) to isolate horizontally adjacent ones of said accommodating spaces (23) from each other.

6. The apparatus as claimed in Claim 5, further **characterized in that** each of said partition walls (231) is made of a material capable of damping sound.

7. The apparatus as claimed in any one of the preceding claims, **characterized in that** each of said accommodating spaces (23, 23a, 23b, 23c) is provided with a lining (230) made of a material capable of damping sound.

8. The apparatus as claimed in any one of the preceding claims, **characterized in that** said inlet side (232a) of said structural frame (22a) has opposite vertical edges (2321) formed respectively with a pair of wind guiding pieces (26) that define a wind channel (261) converging toward said inlet side (232a).

9. The apparatus as claimed in any one of the preceding claims, **characterized in that** each of said accommodating spaces (23b) includes a windmill mounting portion (235) having said windmill (24) of the respective one of said electric generating units (20) mounted therein, and a wind guiding portion (234) between said inlet side (232b) of said structural frame (22b) and said windmill mounting portion (235), said wind guiding portion (234) defining a wind channel that converges toward said windmill mounting portion (235).

10. The apparatus as claimed in any one of the preceding claims, further
**characterized by**:
abase (21b) having said structural frame (22b) mounted rotatably thereon; and
an orientation control unit (27) coupled to said base (21b) and said structural frame (22b) for varying orientation of said structural frame (22b) relative to said base (21b) in accordance with wind direction.

11. The apparatus as claimed in Claim 10, **characterized in that** said orientation control unit (27) includes:
a driving member (272) mounted in said base (21b);
a driven member (273) mounted on said structural frame (22b) and driven rotatably by said driving member (272) ;
a wind direction sensor (271) for generating a wind direction signal in accordance with the wind direction; and
a controller (274) coupled electrically to said drivingmember (272) and said wind direction sensor (271), said controller (274) controlling said driving member (272) according to the wind direction signal received from said wind direction sensor (271) so as to drive said driven member (273) to rotate said structural frame (22b) about a vertical axis (A) relative to said base (21b) .

12. The apparatus as claimed in Claim 4 or any claim dependent thereon, further **characterized in that**:
said casing (242c) of said windmill (24c) of each of said electric generating units (20c) is mounted rotatably on said upright prop (241c);
each of said electric generating units (20c) further including an orientation control unit (27c) coupled to said upright prop (241c) and said casing (242c) for varying orientation of said casing (242c) relative to said upright prop (241c) in accordance with wind direction.

13. The apparatus as claimed in Claim 12, further **characterized in that** said orientation control unit (27c) includes:
a driving member (272c) mounted on said upright prop (241c) ;
a driven member (273c) mounted on said casing (242c) and driven rotatably by said driving member (272c);
a wind direction sensor (271c) for generating a wind direction signal in accordance with the wind direction; and
a controller (275c) coupled electrically to said driving member (272c) and said wind direction sensor (271c) , said controller (275c) controlling said driving member (272c) according to the wind direction signal received from said wind direction sensor (271c) so as to drive said driven member (273c) to rotate said casing (242c) about a vertical axis (B) relative to said upright prop (241c).
